# EUROPEAN PATENT SPECIFICATION

(11) **EP 2 087 541 B1**
(45) Date of publication and mention of the grant of the patent: **02.05.2012**
(21) Application number: 06816623.0
(22) Date of filing: 06.10.2006
(51) Int. Cl.: H01M 8/02

(54) **FUEL CELL AND FLOW FIELD PLATE FOR THE SAME**
BRENNSTOFFZELLE UND FLUSS-FELDPLATTE DAFÜR
PILE À COMBUSTIBLE ET PLAQUE À CHAMP DE FLUX CORRESPONDANTE

(43) Date of publication of application: 12.08.2009
(73) Proprietor: Daimler AG, 70327 Stuttgart (DE)
(72) Inventor: WONG, Alfred Ngan Fai, Vancouver, British Columbia V5R 1G5 (CA); YIP, David Kau-Kee, Vancouver, British Columbia V5R 2V9 (CA)
(74) Representative: JENSEN & SON
(86) International application number: PCT/US2006/039546
(87) International publication number: WO 2008/041994

(56) References cited:
- WO-A-2004/068622
- FR-A- 2 879 353
- US-A1- 2005 064 263
- US-B1- 6 555 261

## Description

### BACKGROUND OF THE INVENTION

### Field of the Invention

The present invention relates to fuel cells and flow field plates for fuel cells.

### Description of the Related Art

Electrochemical fuel cells convert fuel and oxidant into electricity. Solid polymer electrochemical fuel cells generally employ a membrane electrode assembly that includes an ion exchange membrane or solid polymer electrolyte disposed between two electrodes typically comprising a layer of porous, electrically conductive sheet material, such as carbon fiber paper or carbon cloth. The membrane electrode assembly usually contains a layer of catalyst, typically in the form of finely comminuted platinum, at each membrane electrode interface to induce the desired electrochemical reaction. In operation, the electrodes are electrically coupled for conducting electrons between the electrodes through an external circuit. A number of membrane electrode assemblies are usually electrically coupled in series to form a fuel cell stack having a desired power output.

The membrane electrode assembly is typically interposed between two electrically conductive bipolar flow field plates or separator plates. These bipolar flow field plates act as current collectors, provide support for the electrodes, and provide flow fields for the supply of reactants, such as fuel and oxidant, and removal of excess reactants and products that are formed during operation, such as product water. In some cases, the bipolar flow field plate is formed by joining two flow field plates together; namely, an anode flow field plate and a cathode flow field plate, so that an anode flow field is formed on one surface of the bipolar flow field plate, a cathode flow field is formed on an opposing surface of the bipolar flow field plate, and a coolant flow field is formed between the anode flow field plate and the cathode flow field plate. In other cases, the bipolar flow field plate may be a single plate that has an anode flow field on one surface and a cathode flow field on an opposing surface. These bipolar flow field plates may be formed from a metallic, carbonaceous, graphitic, or a polymeric material.

Bipolar flow field plates typically contain manifolds for allowing the supply and exhaust of reactants and products, respectively, during fuel cell operation. These manifolds may be internal manifolds (*i.e*., manifold openings are formed in the plate) or external manifolds (*i.e*., manifold openings are attached to an edge of the plate or the fuel cell stack).

During regular fuel cell operation, water produced at the cathode electrode may migrate to the anode electrode due to a water vapour pressure differential between the fuel and the oxidant in the anode and cathode flow fields, respectively, and may condense into water droplets in the electrodes and/or flow fields if the flow rates of the reactants are relatively low and/or if the temperature of the fuel cell is relatively low. An excess of water droplets is undesirable because the condensed water droplets may cause non-uniform fluid flow in the flow fields and reactant starvation (for example, water "flooding" in the anode and/or cathode), typically resulting in unstable fuel cell performance and fuel cell degradation.

One approach to solving this problem is to remove excess liquid water in the cathode and/or cathode flow fields by increasing the pressure drop of the flow fields, supplying a greater amount of reactant fluid than stoichiometrically required, and/or operating at a higher operating pressure. Another approach is to remove the water droplets by increasing the operating temperature to evaporate the liquid water in the fuel cell. However, all of these methods are undesirable because they increase parasitic power consumption and decrease fuel efficiency.

In another approach, the anode and cathode flow field geometry may be designed to have a relatively high pressure drop to enhance the flow of reactant fluids through the fuel cell and the removal of product water from the fuel cell. However, this results in an increase in the operating pressure to compensate for the pressure drop of the flow fields, thus increasing parasitic power consumption (*i.e*., through the use of a larger pump or compressor to supply the reactants) and decreasing fuel efficiency.

To avoid increased parasitic loads, the flow fields may be designed for low pressure drop operation, for example, to as low as 150 mbar, particularly for low pressure fuel cells that operate at less than about 0.21 barg. However, when operating low pressure fuel cells at low power (for example, at a current density of less than about 0.1A/cm²), unstable fuel cell performance is often observed because a relatively small amount of reactants are delivered to the fuel cells, thereby resulting in a reactant flow velocity that is inadequate to clear excessive liquid water in the flow fields of the low pressure fuel cell. This is particularly true for the anode flow fields because the fuel is usually supplied at a stoichiometry that is as low as possible (*i.e*., low fuel flow rate) to maximize fuel efficiency while sustaining the required power generation. Furthermore, during low pressure and low power operation, the temperature of the fuel cell is typically low, which further enhances the condensation of water vapour in the anode flow fields.

U.S. Patent Application Publication No. 2005/0064263 describes an improved fluid flow plate arrangement comprising a first fluid flow plate comprising a plurality of first channels separated by first lands, and a second fluid flow plate comprising a plurality of second channels separated by second lands. At least one of the second lands has a cross-sectional width wider than a cross-sectional width of at least one of the first lands. However, with low pressure operation at low power, the flow velocity (or the volumetric flow per unit length per channel) will be too low to remove liquid water from the straight flow channels. Further decreasing the cross-sectional area of each of the flow channels will increase the flow velocity, but this also increases the pressure drop of the flow channels, thereby increasing the operating pressure.

There remains a need to develop new flow field designs to minimize unstable performance of a fuel cell stack, particularly when operating at low pressure and low power conditions. The present invention addresses these issues and provides further related advantages.

### BRIEF SUMMARY OF THE INVENTION

The invention relates to a method of operating a bipolar flow field plate assembly for a fuel cell comprising an anode flow field and a cathode flow field, the anode flow field comprising a single serpentine anode flow channel with at least one anode channel pass and at least one anode landing on a first surface, and the cathode flow field comprising at least one serpentine cathode flow channel with a plurality of cathode channel passes and cathode landings on a first surface, wherein each anode channel pass aligns and overlaps with an alternating cathode channel pass, according to claim 1.

These and other aspects of the invention will be evident in view of the attached figures and the following detailed description.

### BRIEF DESCRIPTION OF THE DRAWINGS

In the figures, identical reference numbers identify similar elements or acts. The sizes and relative positions of elements in the figures are not necessarily drawn to scale. For example, the shapes of various elements and angles are not drawn to scale, and some of these elements are arbitrarily enlarged and positioned to improve figure legibility. Further, the particular shapes of the elements, as drawn, are not intended to convey any information regarding the actual shape of the particular elements, and have been solely selected for ease of recognition in the figures.
Figure 1A is a planar view of the anode flow channel configuration of a prior art bipolar flow field plate assembly.
Figure 1B is a planar view of the cathode flow channel configuration of a prior art bipolar flow field plate assembly.
Figure 2 is a cross-sectional view along section A-A of the prior art bipolar flow field plate assembly of Figures 1A and 1B, and a fuel cell incorporating the prior art bipolar flow field plate assembly.
Figure 3A is a planar view of the anode flow channel configuration of a bipolar flow field plate assembly according to an embodiment of the present invention.
Figure 3B is a planar view of the cathode flow channel configuration of a bipolar flow field plate assembly according to an embodiment of the present invention.
Figure 4 is a cross-sectional view along section B-B of the bipolar flow field plate assembly of Figures 3A and 3B, and a fuel cell incorporating the bipolar flow field plate assembly.
Figure 5 is an average cell voltage vs. time graph of the performance of a fuel cell stack using flow field plates according to the prior art.
Figure 6 is an average cell voltage vs. time graph of the performance of a fuel cell stack using flow field plates according to an embodiment of the present invention.

### DETAILED DESCRIPTION OF THE INVENTION

In the following description, certain specific details are set forth in order to provide a thorough understanding of various embodiments of the invention. However, one skilled in the art will understand that the invention may be practiced without these details. In other instances, well-known structures associated with fuel cells, fuel cell stacks, and fuel cell systems have not been shown or described in detail to avoid unnecessarily obscuring descriptions of the embodiments of the invention.

Unless the context requires otherwise, throughout the specification and claims which follow, the word "comprise" and variations thereof, such as "comprises" and "comprising" are to be construed in an open, inclusive sense, that is as "including but not limited to".

Reference throughout this specification to "one embodiment" or "an embodiment" means that a particular feature, structure or characteristic described in connection with the embodiment is included in at least one embodiment of the present invention. Thus, the appearances of the phrases "in one embodiment" or "in an embodiment" in various places throughout this specification are not necessarily all referring to the same embodiment. Furthermore, the particular features, structures, or characteristics may be combined in any suitable manner in one or more embodiments.

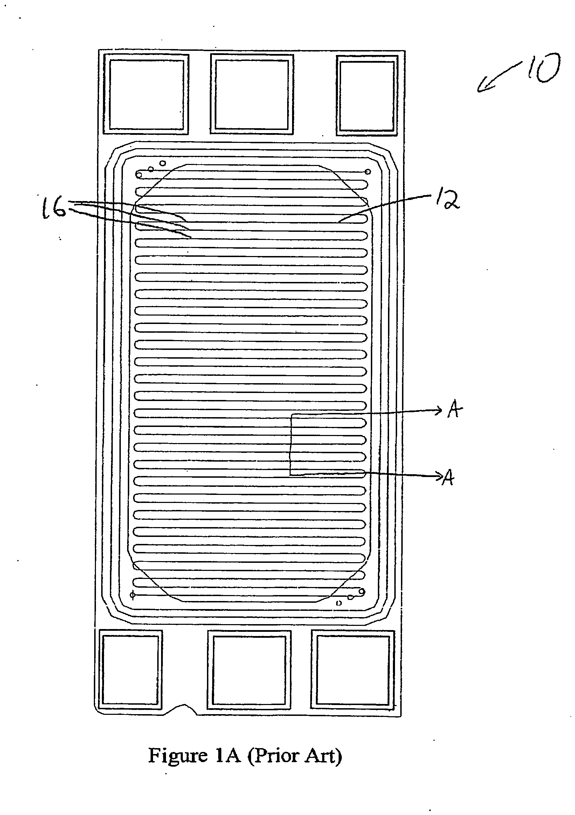

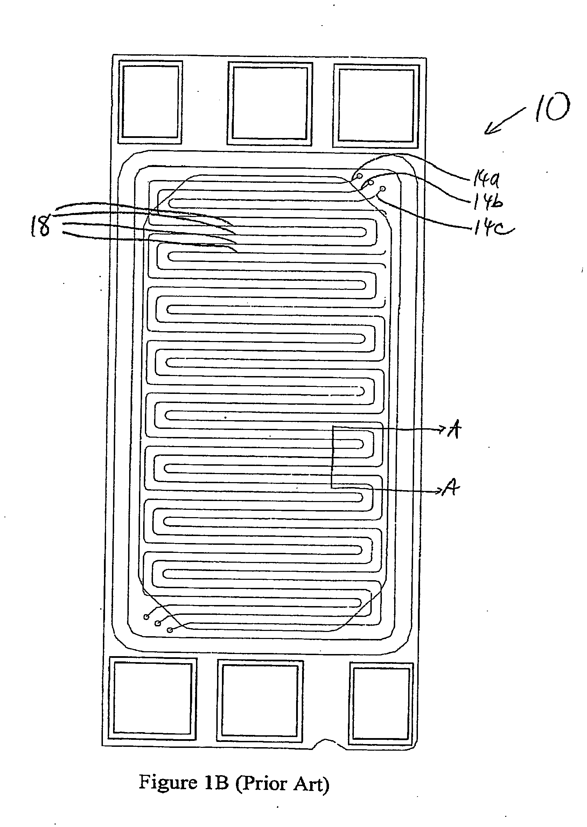

Figures 1A and 1B show planar views of the anode flow channel configuration and the cathode flow channel configuration, respectively, of a prior art bipolar flow field plate assembly 10.

With reference to Figure 1A, which shows a planar view of plate assembly 10 from the anode side, plate assembly 10 comprises a single anode flow channel 12 in a serpentine configuration (the solid line represents the centerline of anode flow channel 12). In this configuration, anode flow channel 12 traverses back and forth in folds across the plate assembly, for example, across the width of the plate assembly, and creates a plurality of anode channel passes 16 with each turn to guide the fluids flowing therein from one end of plate assembly 10 to an opposite end of plate assembly 10. With reference to Figure 1B, which shows a planar view of plate assembly 10 from the cathode side, plate assembly 10 comprises three cathode flow channels 14a, 14b, 14c in a serpentine configuration (the solid line represents the centerline of cathode flow channels 14a, 14b, 14c). In this configuration, each of cathode flow channels 14a, 14b, 14c traverse back and forth in folds across the plate assembly, for example, across the width of the plate assembly, and creates a plurality of cathode channel passes 18 with each turn to guide the fluids flowing therein from one end of plate assembly 10 to an opposite end of plate assembly 10. In this prior art bipolar flow field plate assembly, each cathode flow pass 18 aligns and overlaps with an anode flow pass 16.

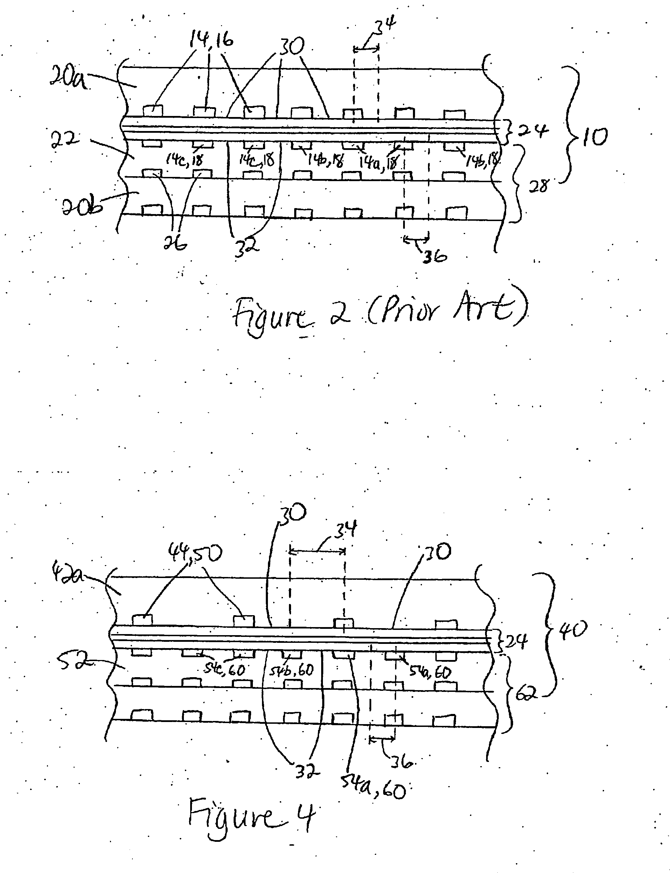

Figure 2 shows a cross-sectional view of bipolar flow field plate assembly 10 at section A-A of Figures 1A and 1B, in a fuel cell configuration. Fuel cell 28 includes an anode flow field plate 20a, which comprises an anode flow field with anode flow channel 12, a cathode flow field plate 22, which comprises a cathode flow field with cathode flow channels 14a, 14b, 14c, and a membrane electrode assembly 24 (hereinafter referred to as "MEA") that is interposed between anode flow field plate 20a and cathode flow field plate 22. In this prior art fuel cell configuration, each cathode flow pass 18 of cathode flow field plate 22 aligns and overlaps with an anode flow pass 16 of anode flow field plate 20a. In a fuel cell stack configuration, an adjacent anode flow field plate 20b of an adjacent fuel cell is placed against the opposing surface of cathode flow field plate 22 (*i.e*., against coolant flow channels 26).

In this embodiment, cathode plate 22 further contains a coolant flow field with coolant flow channels 26 on an opposing surface of plate 22 to allow the flow of a coolant, such as water, glycol, or mixtures thereof, through the fuel cell to remove heat from the reactant and product fluids in the anode and cathode flow channels, thereby maintaining the fuel cell at an optimum temperature during fuel cell operation and preventing damage to the MEA. Additionally, or alternatively, the coolant flow field may be formed on an opposing surface of the anode flow field plate (not shown). Anode flow field plate 20b and cathode flow field plate 22 form a bipolar flow field plate assembly 28, wherein each cathode flow pass 18 of cathode flow field plate 22 aligns and overlaps with an anode flow pass 16 of anode flow field plate 20b.

Each of anode channel passes 16 in the anode flow field of anode plate 20a are separated by anode landings 30 and, likewise, each of cathode channel passes 18 in the cathode flow field of cathode plate 22 are separated by cathode landings 32. In this prior art plate, pitch 34 of the anode flow field is the same as pitch 36 of the cathode flow field. As commonly known in the art, the pitch of the flow field is defined as the distance between the center (or centerline) of one flow channel or channel pass to the center (or centerline) of an adjacent landing. In other words, the pitch is half the distance between adjacent flow channels or channel passes.

During operation of a fuel cell or fuel cell stack, a certain amount of pressure is typically needed to deliver reactant fluids to the fuel cell(s) (or the flow channels of the bipolar flow field plates in the fuel cell(s)) and to run other fuel cell system components, all of which governs the operating pressure of the fuel cell. Thus, the reactant streams are typically pressurized to an operating pressure by means of a compressor, pump, blower, fan, or the like. In most cases, a lower operating pressure is desirable in order to minimize the amount of parasitic power that is needed to pressurize the anode and cathode reactant streams. Furthermore, it is desirable to supply only the stoichiometrically required amount of fuel, or an amount close to the stoichiometrically required amount, to the anode flow channel because this reduces the amount of excess fuel exhausted from the fuel cell(s), thereby improving fuel utilization and efficiency.

However, when operating a fuel cell or fuel cell stack incorporating flow field plates in the configuration shown in Figures 1A, 1B and 2 under low pressure and low power operating conditions, unstable performance is observed. Without being bound by theory, it is believed that the fluid(s) flowing in the anode flow channel are supplied at an insufficient flow velocity to remove water that has migrated from the cathode to the anode at these operating conditions.

It has surprisingly been discovered that low pressure operation of fuel cells can be enhanced by reducing the length of the anode flow channel while simultaneously reducing its cross-sectional area. This allows the anode flow channel to have the same total flow channel pressure drop as the single, relatively longer serpentine anode flow channel in the prior art bipolar flow field plate. As a result, the pressure drop per unit length can be increased to create enough driving force to remove water droplets that are formed in the anode flow channel and/or anode electrode during operation, and, in particular, under low pressure and low power operation.

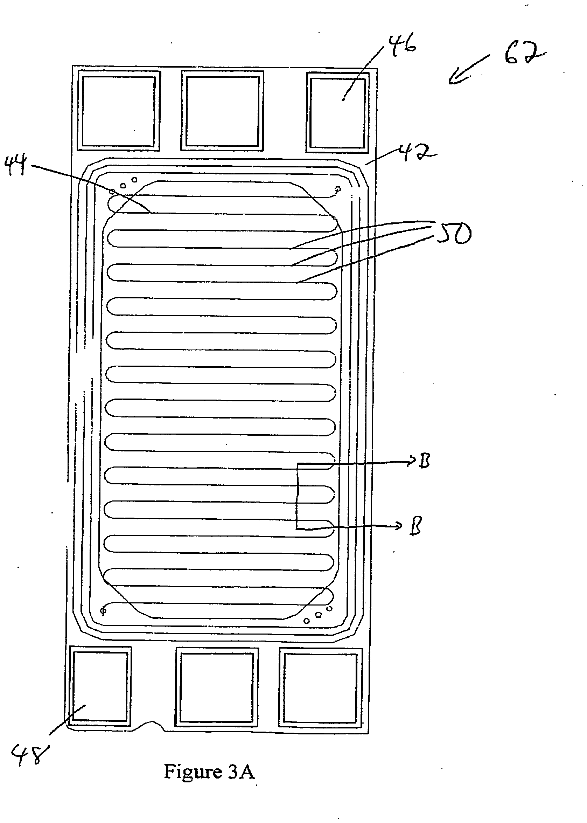

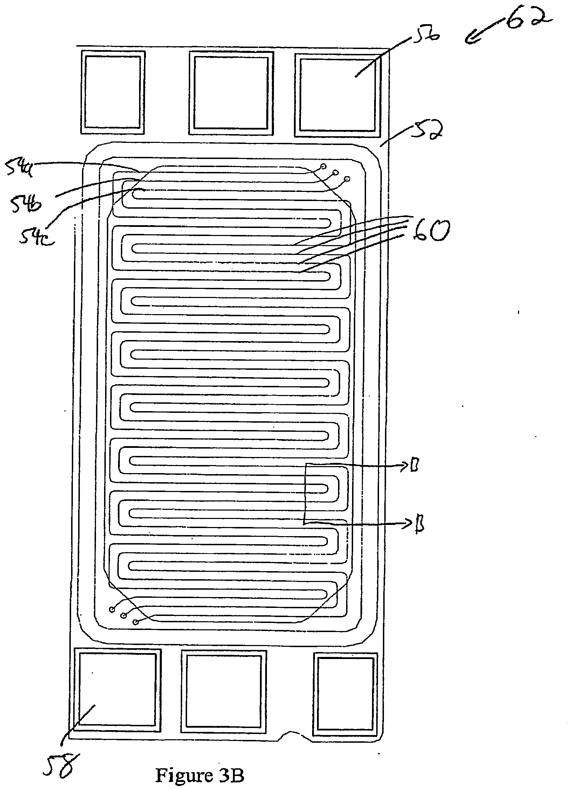

Figures 3A and 3B show planar views of the anode flow channel configuration and the cathode flow channel configuration, respectively, of a bipolar flow field plate assembly 62 according to the present invention.

In Figure 3A, anode flow field plate 42 contains an anode flow field with a single anode flow channel 44 in a serpentine configuration (again, the lines representing[?] the centerline of the flow channel). Anode flow channel 44 directs a fuel, such as a hydrogen-containing fuel, supplied from a fuel inlet manifold opening 46 and exhausts excess fuel and inerts to a fuel outlet manifold opening 48. Again, the serpentine configuration of anode flow channel 44 creates a plurality of anode channel passes 50 as the flow channel traverses back and forth across anode flow field plate 42, in this case, traversing across the width of the plate, from fuel inlet manifold opening 46 to fuel outlet manifold opening 48. The use of a single serpentine anode flow channel allows for maximum flow velocity of the fuel to remove any liquid water formed/condensed therein during low pressure operation.

Similarly, in Figure 3B, cathode flow field plate 52 contains a cathode flow field with cathode flow channels 54a, 54b, 54c in a serpentine configuration. Cathode flow channels 54a, 54b, 54c direct an oxidant supplied from an oxidant supply manifold opening 56 and exhausts excess oxidant and products to an oxidant outlet manifold opening 58. Again, the serpentine configuration of cathode flow channels 54a, 54b, 54c creates a plurality of cathode channel passes 60 as the flow channels traverses back and forth across cathode flow field plate 52, in this case, across the width of the plate, from oxidant inlet manifold opening 56 to oxidant outlet manifold opening 58.

Figure 4 shows a cross-sectional view of a bipolar flow field plate assembly 62 at section B-B of Figures 3A and 3B, in a fuel cell configuration. Fuel cell 40 includes an anode flow field plate 42a, which comprises an anode flow field with anode flow channel 44 (which forms a plurality of anode channel passes 50, a cathode flow field plate 52), which comprises a cathode flow field with cathode flow channels 54a, 54b, 54c (which forms a plurality of cathode channel passes 60), and a MEA 24 that is interposed between anode flow field plate 50a and cathode flow field plate 52. Each of anode channel pass 50 aligns and overlaps with alternating cathode channel passes 60 to provide adequate gas-to-gas access in the fuel cell. For example, the center (or centerline) of each of anode channel pass 50 aligns and overlaps the center (or centerline) of alternating cathode channel passes 60. Thus, anode pitch 34 is twice cathode pitch 36. This is in contrast to the prior art fuel cell configuration shown in Figure 1, wherein every cathode channel pass 18 aligns and overlaps an anode channel pass 16. In addition, the direction of fluid flow in each overlapping anode and cathode flow passes of the present invention may be either co-flow (flowing in the same direction) or counter-flow (flowing in opposite directions), which may or may not be the same as adjacent overlapping anode and cathode flow passes. In one embodiment, at least a portion of the overlapping anode and cathode flow passes will be co-flow and the remainder portion of the overlapping anode and cathode flow passes will be counter-flow.

To further facilitate low pressure operation in the present invention, anode flow channel 44 and cathode flow channels 54a, 54b, 54c may be designed such that they have a low pressure drop, for example, about 150 mbar or less.

In some embodiments, the ratio of the width of anode flow channel 44 and the width of anode landing 30 is greater than or equal to about 1:3. In other embodiments, the ratio of the total anode channel area to the total anode flow field plate active area is less than about 3:10 (or, in other words, that the total anode flow channel area is less than about 30% of the total anode flow field plate active area). In this context, the total anode flow channel area is defined to be the width of the anode flow channel multiplied by the total length of the anode flow channel from the fuel inlet manifold to the fuel outlet manifold, while the total anode flow field plate active area is defined as the total area of the anode flow field plate that is adjacent the anode electrode of the MEA.

To further enhance the removal of liquid water that is formed in anode flow channel 44, the heat transfer rates of the anode and cathode flow field plates of each fuel cell may be such that more heat is removed from the fluids in the cathode flow channels 54a, 54b, 54c than from the fluids in anode flow channel 12 to enhance water condensation at the cathode. At low pressure and low power operating conditions, it is preferable to keep water at the cathode because a relatively higher volumetric amount of oxidant is supplied to the cathode flow channels when using air as the oxidant (because air only comprises 21 % oxygen) as compared to the volumetric amount of fuel delivered to the anode flow channels.

In one example, the heat transfer properties of the anode and cathode flow field plates may be varied by varying the web thicknesses of the plates such that the web thickness of the anode flow field plate is greater than the web thickness of the cathode flow field plate so that more heat is removed from the cathode flow channels than the anode flow channel. In this context, the web thickness is defined as the cross-sectional distance from the bottom of the flow channels to the opposing surface (or backside) of the respective flow field plate. In the case where the opposing second surface of the anode or cathode flow field plate comprises a coolant flow field with coolant flow channels, the web thickness is defined as the distance from the bottom of the anode or cathode flow channel to the bottom of the coolant flow channel. In another example, the flow field plate materials for the anode and cathode flow field plates may be different so that the thermal conductivity of the anode flow field plate is lower than the thermal conductivity of the cathode plate. As a result, more heat is removed from the cathode flow channels than the anode flow channel.

In the embodiments described above, three serpentine cathode flow channels have been illustrated in the cathode flow field plate. However, it will be understood that one, two, four or more cathode flow channels may be used by varying the cathode flow channel length and/or cross-sectional area. Furthermore, straight cathode flow channels may be used in some cases and are within the scope of the present invention. In addition, it may employ more than one serpentine anode flow channel by increasing the pressure drop of the anode flow channels to ensure an adequate flow velocity during operation. Furthermore, in some embodiments, the anode and cathode channel passes may be configured such that each anode channel pass aligns and overlaps every third or every fourth cathode channel pass instead of alternating cathode channel passes, in which case the pitch of the anode flow field will be greater than twice the pitch of the cathode flow field. In addition, it will be understood that the size, shape, and location of the inlet and outlet manifold openings are not be limited to those shown in the figures above.

The following examples are provided to illustrate certain aspects and embodiments of the invention but should not be construed as limiting in any way.

### EXAMPLES

### Example 1

### Bipolar Flow Field Plate Assemblies

Two bipolar flow field plate assemblies were made with the dimensions as specified in Table 1:

| **Table 1** | | | |
|---|---|---|---|
| | Anode #1 flow field plate | Anode #2 flow field plate | Cathode flow field plate |
| Landing width (mm) | 1.35 | 4.14 | 1.11 |
| Channel width (mm) | 1.41 | 1.38 | 1.65 |
| Channel pitch (mm) | 2.76 | 5.52 | 2.76 |
| Channel length (mm) | 3598 | 1804 | 1191 |
| Channel cross-sectional area (mm²) | 1.34 | 0.969 | 1.166 |
| Pressure drop (mbar) | 150 | 150 | 120 |
| Ratio of landing to channel width | 0.96 | 3 | 0.67 |
| Number of channels | 1 | 1 | 3 |
| Configuration | Serpentine | Serpentine | Serpentine |

A first bipolar flow field plate assembly (prior art) was formed from Anode #1 flow field plate joined together with the cathode flow field plate in Table 1. In this prior art bipolar flow field plate assembly, every cathode channel pass aligned and overlaped with an anode channel pass. Thus, the pitch of the Anode #1 anode flow field plate was the same as the pitch of the cathode flow field plate.

According to an embodiment of the present invention, a second bipolar flow field plate assembly was formed from Anode #2 flow field plate joined together with the cathode flow field plate in Table 1. In this bipolar flow field plate assembly, each anode channel pass aligned and overlaped with alternating cathode channel passes. Thus, the pitch of the anode flow field plate was double the pitch of the cathode flow field plate.

### Example 2

### Testing of Fuel Cells

Two 44-cell fuel cell stacks employing the bipolar flow field plate assemblies described in Example 1 above were assembled and tested under the conditions as listed in Table 2:

| **Table 2** | |
|---|---|
| | Conditions |
| Current (A/cm²) | 0.078 |
| Fuel Stoic | 1.45 |
| Air Stoic | 2.5 |
| Fuel Pressure (mbarg) | 55 |
| Air Pressure (mbarg) | 41 |
| Fuel humidification temperature (°C) | 56 |
| Oxidant humidification temperature (°C) | 59 |
| Coolant inlet temperature (°C) | 57 |
| Coolant outlet temperature (°C) | 61 |
| Fuel type | 74% hydrogen, 20% carbon dioxide, 6% nitrogen |
| Oxidant type | Air |
| Air Bleed (volume %) | 1.1 |

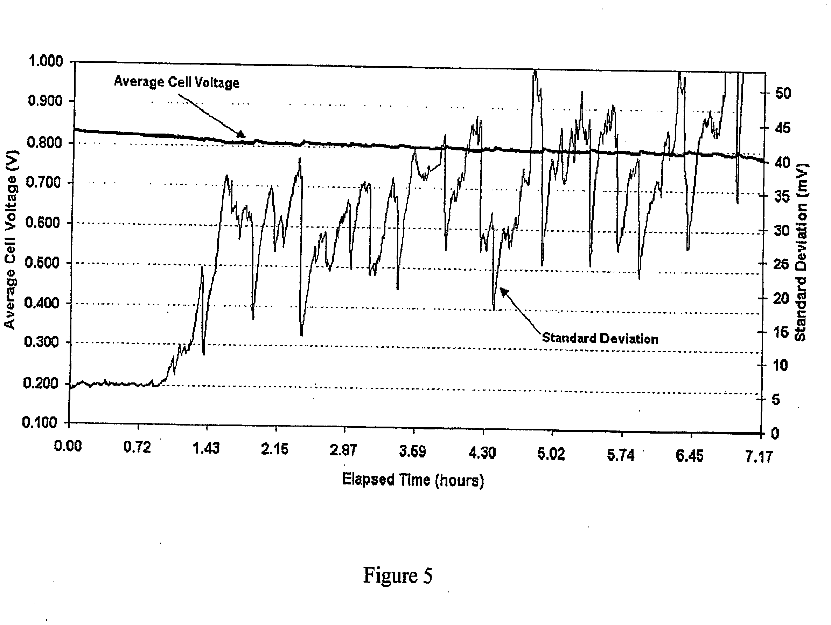

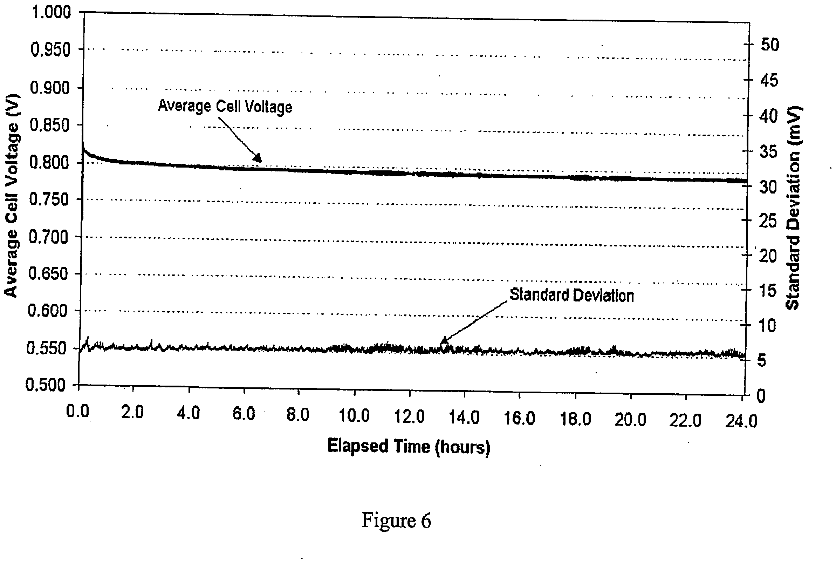

The results of this testing are presented in Figures 5 and 6. Figure 5 shows the average performance of the 44-cell fuel cell stack using the prior art bipolar flow field plate assembly. The average cell voltage of the fuel cell stack was unsteady for 7 hours of operation and slowly decreasing during that time. The standard deviation of the cell voltages also fluctuated significantly, indicating unstable performance. In sharp contrast, Figure 6 shows the average performance of the 44-cell fuel cell stack using the bipolar flow field plate assembly of the present invention. Performance was steady for 24 hours with a low standard deviation in the average cell voltage. Thus, the results set forth in Figures 7 and 8 illustrate that the anode and cathode flow channel configuration of the present invention greatly improved fuel cell performance and stability at low pressure and low power operating conditions.

While particular elements, embodiments, and applications of the present invention have been shown and described, it will be understood that the invention is not limited thereto since modifications may be made by those skilled in the art without departing from the scope of the claim, particularly in light of the foregoing teachings.

## Claims

1. A method of operating a bipolar flow field plate assembly (62) for a fuel cell (40), the bipolar flow field plate assembly (62) comprising:
an anode flow field comprising at least one anode landing (30) on a first surface of the anode flow field, and
a cathode flow field comprising cathode landings (32) on a first surface of the cathode flow field, wherein:
the anode flow field comprises a single serpentine anode flow channel (44) with at least one anode channel pass (50),
the cathode flow field comprises at least one serpentine cathode flow channel (52a, 52b, 52c) with a plurality of cathode channel passes (60), and
each anode channel pass (50) aligns and overlaps with an alternating cathode channel pass (60),
the method **characterized by** comprising the step of operating the fuel cell such that the pressure drop of the anode flow field is 150mbar or less.

2. The method of operating the bipolar flow field plate of claim 1 wherein the ratio of the width of the serpentine anode flow channel (44) to the width of the anode landing (30) is at least 1:3.

3. The method of operating the bipolar flow field plate of claims 1 or 2 wherein the anode flow field further comprises an anode flow channel area and an anode flow field active area, wherein the ratio of the anode flow channel area to the anode flow field active area is less than 3:10.

4. The method of operating the bipolar flow field plate of one of claims 1 to 3, wherein the centreline of each anode channel pass (50) aligns and overlaps with the centreline of the alternating cathode channel pass (60).

5. The method of operating the bipolar flow field plate of one of claims 1 to 4 wherein the plate material is metallic, carbonaceous, graphitic, or a polymeric material.

6. The method of operating the bipolar flow field plate of one of claims 1 to 5, further comprising a coolant flow field on an opposing second surface of at least one of the anode flow field and the cathode flow field.

7. The method of operating the bipolar flow field plate assembly (62) of one of claims 1 to 6, wherein the bipolar flow field plate (62) is provided in a fuel cell (40) comprising:
an anode electrode,
a cathode electrode,
a polymer electrolyte membrane (24) interposed between the anode and cathode electrodes, and
wherein the first surface of the anode flow field is adjacent the anode electrode,
the first surface of the cathode flow field is adjacent the cathode electrode, and
the pitch (34) of the anode flow field is at least twice the pitch (36) of the cathode flow field.

8. The method of operating the bipolar flow field plate assembly of claim 7, wherein the pitch (34) of the anode flow field is twice the pitch (36) of the cathode flow field.

9. The method of operating the bipolar flow field plate assembly, wherein a plurality of the fuel cells of one of claims 7 to 8 are provided in a fuel cell stack.

## Patentansprüche

1. Verfahren zum Betrieb einer bipolaren Flussfeldplatten-Baugruppe (62) für eine Brennstoffzelle (40), wobei die bipolare Flussfeldplatten-Baugruppe (62) umfasst:
ein Anodenflussfeld mit mindestens einer Anodenauflage (30) auf einer ersten Oberfläche des Anodenflussfeldes, und
ein Kathodenflussfeld mit Kathodenauflagen (32) auf einer ersten Oberfläche des Kathodenflussfeldes, wobei:
das Anodenflussfeld einen einzelnen schlangenartigen Anodenflusskanal (44) mit mindestens einem Anodenkanaldurchlauf (50) aufweist,
das Kathodenflussfeld mindestens einen schlangenartigen Kathodenflusskanal (52a, 52b, 52c) mit einer Vielzahl von Kathodenkanaldurchläufen (60) aufweist, und
die Anodenkanaldurchläufe (50) jeweils nach entsprechenden Kathodenkanaldurchläufen ausgerichtet sind und diese überlappen,
wobei das Verfahren durch den Schritt des derartigen Betreibens der Brennstoffzelle gekennzeichnet ist, dass der Druckabfall des Anodenflussfeldes 150 mbar oder weniger beträgt.

2. Verfahren zum Betrieb der bipolaren Flussfeldplatte nach Anspruch 1, wobei das Verhältnis zwischen der Breite des schlangenartigen Anodenflusskanals (44) und der Breite der Anodenauflage (30) mindestens 1:3 beträgt.

3. Verfahren zum Betrieb der bipolaren Flussfeldplatte nach Anspruch 1 oder 2, wobei das Anodenflussfeld weiter eine Anodenflusskanalfläche und eine aktive Anodenflussfeldfläche aufweist, wobei das Verhältnis zwischen der Anodenflusskanalfläche und der aktiven Anodenflussfeldfläche weniger als 3:10 beträgt.

4. Verfahren zum Betrieb der bipolaren Flussfeldplatte nach einem der Ansprüche 1 bis 3, wobei die Mittellinie der Anodenkanaldurchläufe (50) jeweils nach der Mittellinie der entsprechenden Kathodenkanaldurchläufe (60) ausgerichtet ist und diese überlappt.

5. Verfahren zum Betrieb der bipolaren Flussfeldplatte nach einem der Ansprüche 1 bis 4, wobei das Plattenmaterial ein metallisches, kohlenstoffhaltiges, Graphit- oder Polymermateial ist.

6. Verfahren zum Betrieb der bipolaren Flussfeldplatte nach einem der Ansprüche 1 bis 5, weiter umfassend ein Kühlmittelflussfeld auf einer gegenüber liegenden zweiten Oberfläche des Anodenflussfeldes und/oder des Kathodenflussfeldes.

7. Verfahren zum Betrieb der bipolaren Flussfeldplatten-Baugruppe (62) nach einem der Ansprüche 1 bis 6, wobei die bipolare Flussfeldplatte (62) in einer Brennstoffzelle (40) angeordnet ist, die umfasst:
eine Anodenelektrode,
eine Kathodenelektrode,
eine zwischen der Anoden- und der Kathodenelektrode angeordnete Polymer-Elektrolytmembran, und
wobei die erste Oberfläche des Anodenflussfeldes an die Anodenelektrode angrenzt,
die erste Oberfläche des Kathodenflussfeldes an die Kathodenelektrode angrenzt, und
die Teilung (34) des Anodenflussfeldes mindestens das Zweifache der Teilung (36) des Kathodenflussfeldes beträgt.

8. Verfahren zum Betrieb der bipolaren Flussfeldplatten-Baugruppe nach Anspruch 7, wobei die Teilung (34) des Anodenflussfeldes das Zweifache der Teilung (36) des Kathodenflussfeldes beträgt.

9. Verfahren zum Betrieb der bipolaren Flussfeldplatten-Baugruppe, wobei eine Vielzahl von Brennstoffzellen nach Anspruch 7 oder 8 in einem Brennstoffzellenstapel vorgesehen ist.

## Revendications

1. Procédé de fonctionnement d'un ensemble de plaques à champ d'écoulement (62) destiné à une pile à combustible (40), l'ensemble de plaques à champ d'écoulement (62) comprenant :
un champ d'écoulement d'anode comprenant au moins un palier d'anode (30) sur une première surface du champ d'écoulement d'anode, et
un champ d'écoulement de cathode comprenant des paliers de cathode (32) sur une première surface du champ d'écoulement de cathode sachant que :
le champ d'écoulement d'anode comprenant un canal unique d'écoulement d'anode en serpentin (44) avec au moins une passe de canal d'anode (50),
le champ d'écoulement de cathode comprend au moins un canal d'écoulement de cathode en serpentin (52a, 52b, 52c) avec une pluralité de passes de canal de cathode (60), et
chaque passe de canal d'anode (50) s'aligne à une passe de canal de cathode (60) en alternance et s'y superpose,
le procédé **caractérisé en ce qu'**il comprend l'étape de fonctionnement de la pile à combustible de sorte que la chute de pression du champ d'écoulement d'anode est de 150 mbar maximum.

2. Procédé de fonctionnement d'un ensemble de plaques à champ d'écoulement bipolaire selon la revendication 1, le rapport entre la largeur du canal d'écoulement d'anode en serpentin (44) et la largeur du palier d'anode (30) est au moins de 1:3.

3. Procédé de fonctionnement de la plaque de champ d'écoulement bipolaire selon la revendication 1 ou la revendication 2, sachant que le champ d'écoulement d'anode comprend une zone de canal d'écoulement d'anode et une zone active de champ d'écoulement d'anode, le rapport entre la zone de canal d'écoulement d'anode et la zone active de champ d'écoulement d'anode est inférieure à 3 :10.

4. Procédé de fonctionnement de la plaque de champ d'écoulement bipolaire selon l'une quelconque des revendications 1 à 3, l'axe de chaque passe de canal d'anode (50) s'aligne à l'axe de la passe de canal de cathode (60) en alternance et s'y superpose.

5. Procédé de fonctionnement de la plaque de champ d'écoulement bipolaire selon l'une quelconque des revendications 1 à 4, le matériau de la plaque étant une matière métallique, carbonée, graphitique ou polymère.

6. Procédé de fonctionnement de la plaque de champ d'écoulement bipolaire selon l'une quelconque des revendications 1 à 5, comprenant en outre un champ d'écoulement de fluide de refroidissement sur la seconde surface opposée d'au moins un champ d'écoulement d'anode et un champ d'écoulement de cathode.

7. Procédé de fonctionnement de l'ensemble de plaques de champ d'écoulement bipolaire (62) selon l'une quelconque des revendications 1 à 6, la plaque de champ d'écoulement bipolaire (62) est prévue dans une pile à combustible (40) comprenant :
une électrode d'anode
une électrode de cathode
une membrane électrolyte (24) en polymère intercalée entre les électrodes de cathode et d'anode, et
la première surface du champ d'écoulement d'anode est adjacente à l'électrode d'anode,
la première surface de champ d'écoulement de cathode est adjacente à l'électrode de cathode,
et le pas (34) du champ d'écoulement d'anode est au moins le double du pas (36) du champ d'écoulement de cathode.

8. Procédé de fonctionnement de l'ensemble de plaques de champ d'écoulement bipolaire selon la revendication 7, le pas (34) du champ d'écoulement d'anode est le double du pas du champ d'écoulement de cathode.

9. Procédé de fonctionnement de l'ensemble de plaques de champ d'écoulement bipolaire, une pluralité de piles à combustible selon l'une quelconque des revendications 7 à 8 est prévue dans l'empilement d'une pile à combustible.
